(19) Europäisches Patentamt / European Patent Office / Office européen des brevets

(11) **EP 4 212 584 A1**

(12) **EUROPEAN PATENT APPLICATION**
published in accordance with Art. 153(4) EPC

(43) Date of publication:
**19.07.2023 Bulletin 2023/29**

(21) Application number: **21866635.2**

(22) Date of filing: **02.09.2021**

(51) International Patent Classification (IPC):
**C08L 25/12** (2006.01)   **C08L 35/06** (2006.01)
**C08L 51/04** (2006.01)   **C08L 101/12** (2006.01)

(52) Cooperative Patent Classification (CPC):
**C08L 25/12; C08L 35/06; C08L 51/04;
C08L 101/12**

(86) International application number:
**PCT/JP2021/032235**

(87) International publication number:
**WO 2022/054676 (17.03.2022 Gazette 2022/11)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **09.09.2020 JP 2020151567**

(71) Applicant: **Denka Company Limited
Tokyo 103-8338 (JP)**

(72) Inventor: **NAKANISHI, Soichiro
Tokyo 103-8338 (JP)**

(74) Representative: **Gulde & Partner
Patent- und Rechtsanwaltskanzlei mbB
Wallstraße 58/59
10179 Berlin (DE)**

(54) **HEAT RESISTANCE RESIN COMPOSITION AND INJECTION MOLDED BODY THEREOF**

(57)    A heat resistant resin composition which does not cause stringing when performing fusion-bonding using heated plates is provided. A heat resistant resin composition, including: a maleimide-based copolymer (A); and at least one resin (B) selected from the group including: ABS resin, ASA resin, AES resin, and SAN resin; wherein: the heat resistant resin composition has a ratio G'/G" of storage modulus (G') to loss modulus (G") measured in accordance with JIS K 7244-10 under conditions of 240 °C at an angular velocity of 0.63 rad/s is 0.30 or more and 1.00 or less, is provided.

EP 4 212 584 A1

**Description**

**TECHNICAL FIELD**

The present invention relates to a heat resistant resin composition having improved stringing property during fusion-bonding using heated plates and to an injection molded body thereof.

**BACKGROUND**

Due to its superior mechanical strength, appearance, chemical resistance, moldability and the like, acrylonitrile-butadiene-styrene copolymer resin (ABS resin) is used in a wide variety of applications including automobiles, home appliances, office automation equipment, housing materials, daily necessities and the like. In applications which require heat resistance such as interior material of automobiles, ABS resin containing maleimide-based copolymer as the heat resistance providing agent is used (for example, Patent Literature 1, Patent Literature 2). In addition, when bonding resin represented by ABS resin, fusion-bonding using heated plates in which the resins are pressed to a metal plate heated to high temperature and then the molten resins are bonded together is generally performed since it is advantageous in terms of cost.

**CITATION LIST**

**PATENT LITERATURE**

[Patent Literature 1] JP S57-98536A
[Patent Literature 2] JP S57-125242A

**SUMMARY OF INVENTION**

**TECHNICAL PROBLEM**

However, when the molten resin melt by the heated plate is pulled apart from the heated plate, stringing in which the resin is drawn to form a string can occur, resulting in cases where the appearance of the molded article can be deteriorated.

The present invention provides a heat resistant resin composition which does not cause stringing when performing fusion-bonding using heated plates and an injection molded body thereof.

**SOLUTION TO PROBLEM**

The present inventor has conducted extensive studies and found that a heat resistant resin composition, comprising: a maleimide-based copolymer (A); and at least one resin (B) selected from the group consisting of: ABS resin, ASA resin, AES resin, and SAN resin; wherein: the heat resistant resin composition has a ratio G'/G" of storage modulus (G') to loss modulus (G") measured in accordance with JIS K 7244-10 under conditions of 240 °C at an angular velocity of 0.63 rad/s is 0.30 or more and 1.00 or less can provide a heat resistant resin composition which does not cause stringing when performing fusion-bonding using heated plates and an injection molded body thereof, thereby leading to completion of the present invention.

That is, the present invention are as follows.

(1) A heat resistant resin composition, comprising:

a maleimide-based copolymer (A); and
at least one resin (B) selected from the group consisting of: ABS resin, ASA resin, AES resin, and SAN resin; wherein:
the heat resistant resin composition has a ratio G'/G" of storage modulus (G') to loss modulus (G") measured in accordance with JIS K 7244-10 under conditions of 240 °C at an angular velocity of 0.63 rad/s is 0.30 or more and 1.00 or less.

(2) The heat resistant resin composition of (1), wherein the maleimide-based copolymer (A) is contained by 5 to 40 mass , and the resin (B) is contained by 60 to 95 mass%.

(3) The heat resistant resin composition of (1) or (2), wherein the maleimide-based copolymer (A) comprises 40 to 60 mass% of an aromatic vinyl monomer unit and 60 to 40 mass% of a maleimide-based monomer unit.

(4) The heat resistant resin composition of any one of (1) to (3), wherein a melt mass flow rate of the heat resistant resin composition measured in accordance with JIS K 7210 under conditions of 220 °C and 10 kg is 5 to 30 g/10 min.

(5) The heat resistant resin composition of any one of (1) to (4), wherein a Vicat softening temperature of the heat resistant resin composition measured in accordance with JIS K-7206 is 105 °C to 130 °C.

(6) An injection molded body molded by using the heat resistant resin composition of any one of (1) to (5).

(7) The injection molded body of (6) used as an interior material or an exterior material of an automobile.

**EFFECT OF THE INVENTION**

The heat resistant resin composition of the present invention can provide a heat resistant resin composition which undergoes less stringing when performing fusion-bonding using heated plates and having superior appearance.

**EMBODIMENTS OF THE INVENTION**

<Explanation of Terms>

In the present specification, the phrase "A to B" means A or more and B or less.

Hereinafter, the embodiments of the present invention will be described in detail.

The heat resistant resin composition of the present invention is obtained by melt-kneading and then devolatilization-extruding a maleimide-based copolymer (A) and at least one resin (B) selected from the group consisting of SAN resin (styrene-acrylonitrile copolymer resin), ABS resin (acrylonitrile-butadienestyrene copolymer resin), ASA resin (acrylonitrile-styrene-acryl based rubber copolymer resin), and AES resin (acrylonitrile-ethylene -propylene based rubber-styrene copolymer resin) using an extruder.

The maleimide-based copolymer (A) is a copolymer structured with aromatic vinyl monomer unit and maleimide-based monomer unit. In the present invention, the maleimide-based copolymer (A) can further include unsaturated dicarboxylic anhydride-based monomer unit and vinyl cyanide monomer unit as the constituting unit.

The aromatic vinyl monomer unit is styrene, o-methyl styrene, m-methyl styrene, p-methyl styrene, 2,4-dimethyl styrene, ethyl styrene, p-tert-butyl styrene, $\alpha$-methyl styrene, and $\alpha$-methyl-p-methyl styrene for example. Among these, styrene is preferable. These aromatic vinyl monomer units can be used alone, or two or more of these can be used in combination.

The maleimide-based monomer unit is N-alkyl maleimide such as N-methyl maleimide, N-butyl maleimide, and N-cyclohexyl maleimide; and N-phenyl maleimide, N-chlorophenyl maleimide, N-methylphenyl maleimide, N-methoxyphenyl maleimide, and N-tribromophenyl maleimide for example. Among these, N-phenyl maleimide is preferable. These maleimide-based monomer units can be used alone, or two or more of these can be used in combination. The maleimide-based monomer unit can be obtained by using a raw material comprising maleimide-based monomer. Otherwise, a raw material comprising unsaturated dicarboxylic monomer unit can be imidized using ammonia or primary amine.

The unsaturated dicarboxylic anhydride-based monomer unit is maleic anhydride, itaconic anhydride, citraconic acid anhydride, and aconitic anhydride for example. Among these, maleic anhydride is preferable. These unsaturated dicarboxylic anhydride-based monomer units can be used alone, or two or more of these can be used in combination.

The vinyl cyanide monomer unit is acrylonitrile, methacrylonitrile, ethacrylonitrile, and fumaronitrile for example. Among these, acrylonitrile is preferable. These acrylonitrile-based monomer units can be used alone, or two or more of these can be used in combination.

The maleimide-based copolymer (A) preferably contains 40 to 60 mass% of the aromatic vinyl monomer unit and 60 to 40 mass% of the maleimide-based monomer unit. More preferably, the maleimide-based copolymer (A) contains 45 to 55 mass% of the aromatic vinyl monomer unit and 55 to 45 mass% of maleimide-based monomer unit. When the content of the constituting unit is in the afore-mentioned range, the maleimide-based copolymer (A) would have superior flowability, heat resistance, and thermal stability. In addition, when the content of the aromatic vinyl monomer unit and the maleimide-based monomer unit is in the afore-mentioned range, compatibility with at least one resin selected from the group consisting of ABS resin, ASA resin, AES resin, and SAN resin described later would improve, and the impact strength of the heat resistant resin composition becomes superior. The content of the aromatic vinyl monomer unit and the maleimide-based monomer unit is a value calculated from the result of 13C-NMR measurement.

In terms of efficiently improving the heat resistance of the heat resistant resin composition, the mid-point glass transition temperature (Tmg) of the maleimide-based copolymer (A) is preferably 175 °C to 200 °C, more preferably 185 °C to 200 °C, and further preferably 195 °C to 200 °C. The mid-point glass transition temperature (Tmg) is a value measured in accordance with JIS K-7121 using DSC. The measurement conditions are as follows.

Name of Instrument: Robot DSC 6200 (available from Seiko Instruments Inc.)
Temperature Elevation Rate: 10 °C/min

To increase the mid-point glass transition temperature (Tmg) of the maleimide-based copolymer (A), content of the maleimide-based monomer unit can be increased, or a monomer with high mid-point glass transition temperature (Tmg) can be copolymerized.

The weight average molecular weight (Mw) of the maleimide-based copolymer (A) is preferably 80,000 to 160,000, more preferably 80,000 to 120,000. When the weight average molecular weight (Mw) of the maleimide-based copolymer (A) is in the afore-mentioned range, the heat resistant resin composition would have superior impact strength. To control the weight average molecular weight (Mw) of the maleimide-based copolymer (A), polymerization temperature, polymerization time, and amount of polymerization initiator added can be adjusted. In addition, concentration of solvent and amount of chain transfer agent added can also be adjusted.

The weight average molecular weight of the maleimide-based copolymer (A) is a value of polystyrene equivalent measured by gel permeation chromatography (GPC), which is measured under following conditions.

Name of Instrument: SYSTEM-21 Shodex (available from Showa Denko K.K.)
Column: PL gel MIXED-B, 3 columns connected in series
Temperature: 40 °C
Detection: differential refractive index
Eluent: tetrahydrofuran
Concentration: 2 mass%
Calibration Curve: standard polystyrene (PS) (available from Polymer Laboratories Ltd) was used for preparation

As the manufacturing method of the maleimide-based copolymer (A), known methods can be adopted. For example, a method in which a monomer mixture comprising aromatic vinyl monomer, maleimide-based monomer, unsaturated dicarboxylic anhydride-based monomer, and other copolymerizable monomer is copolymerized can be mentioned. There is also a method in which a monomer mixture comprising aromatic vinyl monomer, unsaturated dicarboxylic anhydride-based monomer, and other copolymerizable monomer is copolymerized, followed by imidization to allow a part of the unsaturated dicarboxylic anhydride-based monomer unit react with ammonia or primary amine to convert the part of the unsaturated dicarboxylic anhydride-based monomer unit into a maleimide-based monomer unit (hereinafter referred to as "post-imidizing").

The polymerization method of the maleimide-based copolymer (A) includes, for example, solution polymerization and bulk polymerization. Solution polymerization is preferable from the viewpoint that a maleimide-based copolymer (A) with a more uniform copolymerization composition can be obtained by polymerizing while adding the monomer to be copolymerized divisionally for example. The solvent for solution polymerization is preferably non-polymerizable from the viewpoint that formation of byproduct and adverse effect can be suppressed. For example, ketone such as acetone, methyl ethyl ketone, methyl isobutyl ketone, acetophenone and the like; ether such as tetrahydrofuran, 1,4-dioxiane and the like; aromatic hydrocarbon such as benzene, toluene, xylene, chlorobenzene and the like; N,N-dimethylformamide; dimethyl sulfoxide; N-methyl-2-pyrrolidone and the like can be mentioned. In terms of easily removing solvent during devolatilization and recovery of the maleimide-based copolymer (A), methyl ethyl ketone and methyl isobutyl ketone are preferable. Polymerization process of any one of continuous polymerization process, batch process (batch), and semi-batch process can be applied. The polymerization method is not particularly limited. Here, radical polymerization is preferable since high productivity can be achieved with simple process.

In the solution polymerization or the bulk polymerization, polymerization initiator and chain transfer agent can be used, and the polymerization temperature is preferably in the range of 80 to 150 °C. The polymerization initiator is azo compound such as azobisisobutyronitrile, azobiscyclohexanecarbonitrile, azobismethylpropionitrile, and azobismethylbutyronitrile; and peroxide such as benzoyl peroxide, t-butyl peroxybenzoate, 1,1-di-(t-butyl peroxy)cyclohexane, t-butyl peroxy isopropyl monocarbonate, t-butyl peroxy-2-ethylhexanoate, di-t-butyl peroxide, dicumylperoxide, and ethyl-3,3-di-(t-butylperoxy)butyrate. These polymerization initiators can be used alone, or two or more of these can be used in combination. From the viewpoint of the polymerization reaction rate and controlling of the rate of conversion, azo compounds and organic peroxides having a 10 hour half-life of 70 to 120 °C are preferable. The amount of the polymerization initiator used is not particularly limited. Here, the amount is preferably 0.1 to 1.5 mass% with respect to 100 mass% of the total monomer unit, more preferably 0.1 to 1.0 mass%. When the amount of the polymerization initiator used is 0.1 mass% or more, it is preferable since sufficient polymerization reaction rate can be achieved. When the amount of the polymerization initiator used is less than 1.5 mass%, the polymerization reaction rate can be suppressed, thereby allowing easy control of the reaction, resulting in obtaining the target molecular weight easily. The chain transfer agent is n-octyl mercaptan, n-dodecyl mercaptan, t-dodecyl mercaptan, α-methyl styrene dimer, ethyl thioglycolate, limonene, and terpinolene for example. The amount of the chain transfer agent used is not particularly limited, so long as it is in the range which allows to obtain the target molecular weight. Here, the amount of the chain transfer agent used is preferably 0.1 to 0.8 mass% with respect to 100 mass% of the total monomer unit, more preferably 0.15 to 0.5 mass . When the amount of the chain transfer agent used is 0.1 to 0.8 mass , the target molecular weight can be obtained easily.

As a method for introducing the maleimide-based monomer unit of the maleimide-based copolymer (A), a method in which the maleimide-based monomer is copolymerized and a post-imidizing method can be mentioned. Post-imidizing method is preferable since the amount of residual maleimide-based monomer in the maleimide-based copolymer (A) becomes less. The post-imidizing method is a method in which a monomer mixture comprising aromatic vinyl monomer, unsaturated dicarboxylic anhydride-based monomer, and other copolymerizable monomer is copolymerized, followed by imidization to allow a part of the unsaturated dicarboxylic anhydride-based monomer unit react with ammonia or primary amine to convert the part of the unsaturated dicarboxylic anhydride-based monomer unit into a maleimide-based monomer unit. As the primary amine used in the post-imidizing method, for example, alkyl amine such as methylamine, ethylamine, n-propylamine, iso-propylamine, n-butylamine, n-pentylamine, n-hexylamine, n-octylamine, cyclohexylamine, and decylamine; chloro- or bromo- substituted alkyl amine; and aromatic amine such as aniline, toluidine, naphthylamine and the like can be mentioned. Among these, aniline is preferable. These primary amines can be used alone, or two or more of these can be used in combination. In the post-imidizing, a catalyst can be used to enhance the dehydration-ring-closing reaction during the reaction between the primary amine and the unsaturated dicarboxylic anhydride group. The catalyst is, for example, tertiary amine such as trimethylamine, triethylamine, tripropylamine, tributylamine, N,N-dimethylaniline, and N,N-diethylaniline. The temperature of the post-imidizing is preferably 100 to 250 °C, more preferably 120 to 200 °C. When the temperature of the imidizing reaction is 100 °C or higher, the reaction rate is sufficiently fast. Therefore, it is preferable in view of productivity. When the temperature of the imidizing reaction is 250 °C or lower, it is preferable since deterioration of the physical property due to thermal degradation of the maleimide-based copolymer (A) can be suppressed.

As the method for removing volatile component (devolatilization method) such as solvent used in the solution polymerization and unreacted monomer from the solution after the solution polymerization or from the solution after the post-imidizing of the maleimide-based copolymer (A), known method can be applied. For example, a vacuum devolatilization tank equipped with a heater and a devolatilization extruder equipped with a vent can be used. The molten maleimide-based copolymer (A) after devolatilization is transferred to the pelletizing step. The molten copolymer is extruded into strands from a porous die, and processed into pellets by cold cut method, air-cooled hot cutting method or underwater hot cutting method.

The content of the maleimide-based copolymer (A) in the heat resistant resin composition is preferably 5 to 40 mass , more preferably 7 to 35 mass , and further preferably 10 to 30 mass . The content is, specifically for example, 5, 10, 15, 20, 25, 30, 35, 36, 37, 38, 39, or 40 mass , and can be in the range between the two values exemplified herein. When the content of the maleimide-based copolymer (A) is too low, the heat resistance of the heat resistant resin composition may not be improved sufficiently. When the content is too high, the flowability can decrease, resulting in deterioration of molding property.

The resin (B) is selected from the group consisting of ABS resin, ASA resin, AES resin, and SAN resin. Such resins can be used alone, or two or more of these can be used in combination. When two or more resins are used, for example, combination of ABS resin and SAN resin, combination of ASA resin and SAN resin, and combination of AES resin and SAN resin are preferable.

ABS resin, ASA resin, and AES resin are graft copolymers obtained by graft copolymerizing at least a styrene-based monomer and an acrylonitrile-based monomer to a rubbery polymer. For example, when butadiene-based rubber such as polybutadiene, styrene-butadiene copolymer is used as the rubbery polymer, the resin is ABS resin. When acryl-based rubber comprising butyl acrylate or ethyl acrylate is used as the rubbery polymer, the resin is ASA resin. When ethylene-based rubber such as ethylene-α-olefin copolymer is used as the rubbery polymer, the resin is AES resin. Two or more of these rubbery polymers can be used when graft copolymerization is performed.

As the manufacturing method of the graft copolymer such as ABS resin and the like, known methods can be adopted. For example, a manufacturing method performing emulsion polymerization or continuous bulk polymerization can be mentioned. The method which performs the emulsion polymerization is preferable since the content of the rubbery polymer in the final ABS resin composition can be adjusted easily.

As the manufacturing method of the graft copolymer which performs emulsion polymerization, a method in which a styrene-based monomer and an acrylonitrile-based monomer are emulsion-graft copolymerized to a latex of rubbery polymer can be mentioned (hereinafter referred to as "emulsion-graft polymerization method"). A latex of graft copolymer can be obtained by the emulsion-graft polymerization method.

In the emulsion-graft polymerization method, water, emulsifier, polymerization initiator, and chain transfer agent are used, and the polymerization temperature is preferably in the range of 30 to 90 °C. Examples of the emulsifier include anionic surfactant, nonionic surfactant, and amphoteric surfactant. Examples of the polymerization initiator include organic peroxides such as cumene hydroperoxide, diisopropylbenzene peroxide, t-butyl peroxyacetate, t-hexyl peroxybenzoate, t-butyl peroxybenzoate; persulfates such as potassium persulfate and ammonium persulfate; azo-based compounds such as azobisbutyronitrile; reducing agents such as iron ion; secondary reducing agents such as sodium formaldehyde sulfoxylate; and chelating agents such as ethylenediaminetetraacetic acid disodium. Examples of the chain transfer agent include n-octyl mercaptan, n-dodecyl mercaptan, t-dodecyl mercaptan, $\alpha$-methyl styrene dimer, ethyl thioglycolate, limonene, and terpinolene.

The latex of the graft copolymer can be solidified by a known method to collect the graft copolymer. For example, a coagulant is added to the latex of the graft copolymer to allow solidification, and then the graft copolymer is washed and dehydrated in a dehydrator followed by a drying step. Accordingly, a powdered graft copolymer is obtained.

The amount of the monomer remaining in the powdered graft copolymer obtained by the emulsion-graft polymerization method is preferably less than 15,000 $\mu$g/g, more preferably less than 8,000 $\mu$g/g. The amount of the residual monomer can be adjusted by polymerization condition, and is a value determined by gas chromatography.

In terms of impact-resistance, the content of the rubbery polymer in the graft copolymer obtained by the emulsion-graft polymerization method is preferably 40 to 70 mass , more preferably 45 to 65 mass%. The content of the rubbery polymer can be adjusted by, for example, the ratio of the styrene-based monomer and the acrylonitrile-based monomer used with respect to the rubbery polymer when performing the emulsion-graft polymerization.

In terms of impact-resistance and chemical resistance, the constituting unit other than the rubbery polymer of the graft copolymer obtained by the emulsion-graft polymerization method are preferably 65 to 85 mass% of the styrene-based monomer unit and 15 to 35 mass% of the acrylonitrile-based monomer unit.

The gel component of the graft copolymer is preferably in the form of particles. The gel component is a particle of a rubbery polymer obtained by graft copolymerizing a styrene-based monomer and an acrylonitrile-based monomer. The gel component is a component which is insoluble in organic solvent such as methyl ethyl ketone and toluene, and can be separated by centrifugal separation. In some cases, an occlusion structure is formed, in which the styrene-acrylonitrile copolymer is encapsulated as particles inside the rubbery polymer particles. When the graft copolymer and the styrene-acrylonitrile copolymer are melt blended, the gel component exists as a dispersed phase in the form of particles in the continuous phase of the styrene-acrylonitrile copolymer. The gel content is a value calculated as follows. The graft copolymer of mass W is dissolved in methyl ethylene ketone, and then the solution is centrifuged at 20,000 rpm using a centrifuge to precipitate the insoluble matter. Subsequently, the supernatant liquid is removed by decantation to obtain the insoluble matter. From the mass S of dried insoluble matter after vacuum drying, the gel content (mass%) = (S/W) $\times$ 100 is calculated. In a similar manner, gel content can be calculated by dissolving the ABS resin composition in methyl ethyl ketone followed by centrifugal separation, the ABS resin composition obtained by melt blending the graft copolymer and the styrene-acrylonitrile copolymer.

In terms of the impact resistance and the appearance of the molded article, the volume average particle diameter of the gel component of the graft copolymer is preferably in the range of 0.10 to 1.0 um, more preferably 0.15 to 0.50 um. The volume average particle diameter is a value calculated as follows. Ultra thin sections are cut out from the pellets of the ABS resin composition obtained by melt blending the graft copolymer and the styrene-acrylonitrile copolymer, and the cut out sections were observed with a transmission electron microscope (TEM). Image analysis of particles dispersed in the continuous phase was performed and calculation was conducted to obtain the volume average particle diameter. The volume average particle diameter can be adjusted by the particle diameter of the latex of the rubbery polymer used in the emulsion-graft polymerization for example. The particle diameter of the latex of the rubbery polymer can be adjusted by the addition method of the emulsifier and the amount of water used in the emulsion polymerization. The conditions to achieve the preferable range would result in long polymerization time and thus the productivity becomes low. Therefore, a method in which a rubbery polymer having a particle diameter of approximately 0.1 um is polymerized in a short period of time and then the rubber particles are enlarged by chemical aggregation method or physical aggregation method can be mentioned.

The graft ratio of the graft copolymer is preferably 10 to 100 mass%, more preferably 20 to 70 mass% in terms of impact resistance. The graft ratio is a value calculated from the equation of "graft ratio (mass%) = [(G - RC) /RC] $\times$ 100" based on the gel content (G) and the content of the rubbery polymer (RC) . The graft ratio represents the content of the styrene-acrylonitrile copolymer contained in per unit mass of the rubbery polymer either by graft-bonding or by encapsulation. The graft ratio can be adjusted by, for example, the ratio of the monomer and the rubbery polymer, kind and amount of the initiator, amount of the chain transfer agent, amount of emulsifier, polymerization temperature, feeding method (lump / multistage / continuous), addition rate of monomer and the like during the emulsion-graft polymerization.

SAN resin is a copolymer having a styrene-based monomer unit and an acrylonitrile-based monomer unit, such as styrene-acrylonitrile copolymer.

As the other copolymerizable monomers of the SAN resin, (meth)acrylic acid ester-based monomers such as methyl methacrylate; acrylic ester-based monomers such as butyl acrylate and ethyl acrylate; (meth)acrylic acid-based monomers such as methacrylic acid; acrylic acid-based monomers such as acrylic acid; N-substituted maleimide-based monomers such as N-phenyl maleimide can be used.

The constituting unit of the SAN resin is preferably 60 to 90 mass% of styrene-based monomer unit and 10 to 40 mass% of vinyl cyanide monomer unit, more preferably 65 to 80 mass% of styrene-based monomer unit and 20 to 35 mass% of vinyl cyanide monomer unit. When the constituting unit is within the above range, the balance between impact strength and flowability of the obtained heat resistant resin composition is superior. The content of the styrene-based monomer unit and vinyl cyanide monomer unit are values measured by 13C-NMR.

As a manufacturing method of the SAN resin, known method can be adopted. For example, SAN resin can be manufactured by bulk polymerization, solution polymerization, suspension polymerization, emulsion polymerization and the like. The reaction apparatus can be operated by any of the continuous operation, batch operation, and semi-batch operation. In terms of quality and productivity, bulk polymerization and solution polymerization are preferable, and continuous operation is preferable. Examples of the solvents which can be used in bulk polymerization and solution polymerization include alkylbenzenes such as benzene, toluene, ethylbenzene and xylene; ketones such as acetone and methyl ethyl ketone; and aliphatic hydrocarbons such as hexane and cyclohexane.

In the bulk polymerization and solution polymerization of SAN resin, a polymerization initiator and a chain transfer agent can be used, and the polymerization temperature is preferably in the range of 120 to 170 °C. Examples of the polymerization initiator include peroxy ketals such as 1,1-di (t-butylperoxy) cyclohexane, 2,2-di (t-butylperoxy) butane, 2,2-di (4,4-di-t-butylperoxycyclohexyl) propane, and 1,1-di (t-amylperoxy) cyclohexane; hydroperoxides such as cumene hydroperoxide and t-butyl hydroperoxide; alkyl peroxides such as t-butyl peroxyacetate and t-amyl peroxy isononanoate; dialkyl peroxides such as t-butyl cumyl peroxide, di-t-butyl peroxide, dicumyl peroxide, and di-t-hexyl peroxide; peroxyesters such as t-butyl peroxyacetate, t-butyl peroxybenzoate and t-butylperoxy isopropyl monocarbonate; peroxy carbonates such as t-butyl peroxy isopropyl carbonate and polyether tetrakis (t-butyl peroxy carbonate); N,N'-azobis (cyclohexane-1-carbonitrile); N,N'-azobis (2-methylbutyronitrile); N,N'-azobis (2,4-dimethylvaleronitrile); and N,N'-azobis [2-(hydroxymethyl) propionitrile]. These polymerization initiators can be used alone or two or more of these can be used in combination. Examples of the chain transfer agent include n-octyl mercaptan, n-dodecyl mercaptan, t-dodecyl mercaptan, α-methyl styrene dimer, ethyl thioglycolate, limonene, terpinolene and the like.

As the method for removing volatile component such as unreacted monomer and solvent used in the solution polymerization from the solution after polymerization of SAN resin, known method can be applied. For example, a vacuum devolatilization tank equipped with a pre-heater and a devolatilization extruder equipped with a vent can be used. The molten SAN resin after devolatilization is transferred to the pelletizing step. The molten copolymer is extruded into strands from a porous die, and processed into pellets by cold cut method, air-cooled hot cutting method or underwater hot cutting method.

The total amount of the monomer and the solvent remaining in the SAN resin is preferably less than 2,000 μg/g, more preferably less than 1,500 μg/g. The amount of the remaining monomer and the solvent can be adjusted by devolatilization conditions, and is a value determined by gas chromatography.

In terms of the impact resistance and the molding property of the heat resistant resin composition obtained, the weight average molecular weight of the SAN resin is preferably 50,000 to 250,000, more preferably 70,000 to 200,000. The weight average molecular weight is, specifically for example, 50,000, 60,000, 70,000, 80,000, 90,000, 100,000, 110,000, 120,000, 130,000, 140,000, 150,000, 160,000, 170,000, 180,000, 190,000, or 200,000, and can be in the range between the two values exemplified herein.

The weight average molecular weight of the SAN resin is a value of polystyrene equivalent measured in THF solvent by gel permeation chromatography (GPC). Measurement is performed in a similar manner as the maleimide-based copolymer (A). The weight average molecular weight can be adjusted by the kind and amount of the chain transfer agent, solvent concentration, polymerization temperature, kind and amount of polymerization initiator and the like when polymerization is performed.

The resin (B) can be prepared, for example, by using a powdered ABS resin obtained by emulsion polymerization method and a pelletized SAN resin obtained by continuous bulk polymerization method. In addition, the resin (B) can be prepared by first melt blending, in an extruder or the like, a powdered ABS resin obtained by emulsion polymerization method and a pelletized SAN resin obtained by continuous bulk polymerization method, thereby obtaining the resin (B) as a pelletized ABS resin.

As a method for performing melt-kneading and devolatilization-extruding the maleimide-based copolymer (A) and at least one resin (B) selected from the group consisting of ABS resin, ASA resin, AES resin, and SAN resin in an extruder, a known method can be adopted. As the extruder, known devices such as twin-screw extruder, single-screw extruder, multi-screw extruder, and continuous kneader with biaxial rotor can be mentioned. In general, intermeshing co-rotating twin-screw extruder is widely used and can be suitably used. Further, a plurality of these extruders can be used in combination.

The extruder is structured with a kneading unit which performs melt-kneading of the maleimide-based copolymer (A) and the resin (B) and at least one devolatilization unit. The maleimide-based copolymer (A) and the resin (B) supplied to the extruder are first melt in the kneading unit and kneaded into a uniform composition. The kneading unit is structured by combining conventional mixing elements such as kneading disc. In terms of kneading property, it is preferable to arrange an element which can revert the molten resin towards the upstream, such element being arranged at the downstream side of the kneading unit thereby allowing the kneading unit be filled. As such element, for example, reverse lead full flight, reversely staggered kneading, and seal ring can be mentioned.

The heat resistant resin composition melt-kneaded in the kneading unit is transferred to the devolatilization unit in a molten state, and volatile components are devolatilized by a vacuum vent. The devolatilized molten heat resistant resin composition is transferred to the pelletizing step. The molten copolymer is extruded into strands from a porous die, and processed into pellets of heat resistant resin composition by cold cut method, air-cooled hot cutting method or underwater hot cutting method.

As a method of devolatilization-extruding, water injecting devolatilization method in which water is injected in advance of the devolatilization unit is preferable in terms of devolatilization efficiency. For example, after the maleimide-based copolymer (A) and the resin (B) are melt-kneaded in the kneading unit, another kneading unit is arranged to uniformly knead and disperse water into the molten resin. Volatile component is devolatilized with water in the upper-stream devolatilization unit. It is preferable that the kneading unit for adding and kneading water is also filled. The amount of water added is preferably 0.05 to 2.0 parts by mass, with respect to 100 parts by mass of the maleimide-based copolymer (A) and the resin (B) in total. In addition, the water content of the maleimide-based copolymer (A) and the resin (B) can also contribute sufficiently in improving the devolatilization efficiency, however, when such amount is excessive, there may be a problem in operation of the extruder.

The temperature of the cylinder in the kneading unit and the devolatilization unit of the extruder is preferably set at 240 °C or higher, more preferably 260 °C or higher, and further preferably at 280 °C or higher. When the temperature of the cylinder is set high, devolatilization efficiency becomes high. Especially, since the thermal stability of the heat resistant resin composition using the maleimide-based copolymer is superior, the temperature of the cylinder can be set high to reduce the volatile component. On the other hand, the thermal stability of the heat resistant resin composition using $\alpha$-methyl styrene-based copolymer is inferior. Therefore, when the temperature of the cylinder is set high, $\alpha$-methyl styrene generated by thermal decomposition would be contained by a large amount. The pressure of the devolatilization unit is preferably 10 mmHg or lower when water is not added, and 40 mmHg or lower when water is added.

The content of the volatile component calculated from the formulation of the maleimide-based copolymer (A) and the resin (B) supplied to the extruder is preferably less than 3,000 $\mu$g/g. When the content of the volatile component before extrusion is too large, it can be difficult to reduce the content of the volatile component in the heat resistant resin composition.

The content of the rubbery polymer in the heat resistant resin composition is preferably 10 to 20 mass%. When the content is too small, the impact resistance may deteriorate, and when the content is too large, the stiffness and the deflection temperature under load can deteriorate.

The acrylonitrile-based monomer unit contained in the continuous phase obtained by separating the gel component from the heat resistant resin composition is preferably 15 to 35 mass%, more preferably 20 to 30 mass%. When the content is too small, the impact resistance can decrease. When the content is too large, the flowability can decrease. The component of the continuous phase is obtained as follows. The heat resistant resin composition is dissolved in methyl ethyl ketone, and then the gel component is separated as insoluble matter with centrifugation. The supernatant liquid obtained by decantation is then subjected to precipitation using methanol, thereby obtaining the component of the continuous phase.

The ratio (G'/G") of storage modulus (G') to loss modulus (G") of the heat resistant resin composition measured in accordance with JIS K 7244-10 under conditions of 240 °C at an angular velocity of 0.63 rad/s is 0.30 or more and 1.00 or less.

Here, when the ratio (G'/G") of storage modulus (G') to loss modulus (G") is less than 0.30, the stringing property of the heat resistant resin composition is deteriorated. When the ratio exceeds 1.00, the chemical resistance of the heat resistant resin composition is deteriorated. The ratio G'/G" is preferably 0.40 or more and 1.00 or less, more preferably 0.60 or more and 1.00 or less. The ratio G'/G" is, specifically for example, 0.30, 0.40, 0.50, 0.60, 0.70, 0.80, 0.90, or 1.00, and can be in the range between the two values exemplified herein.

As the method for adjusting the value of ratio G'/G", the followings can be mentioned.

For example, value of ratio G'/G" can be increased by adding rubbery component as an additive. As the rubbery component, in terms of the effect to increase the value of ratio G'/G", non-crosslinking rubbery component is preferable. More specifically, polyacrylic acid-based polymer and polybutadiene-based polymer are preferable. These additives can be used alone, or two or more of these can be used in combination.

In addition, the value of ratio G'/G" can also be increased by increasing the molecular weight of the AS resin or the maleimide-based copolymer being formulated, or by increasing the formulation amount of the ABS resin.

The melt mass flow rate of the heat resistant resin composition measured in accordance with JIS K 7210 (220 °C, 10 kg) is preferably 5 to 30 g/10 min, more preferably 15 to 20 g/10 min. The melt mass flow rate is, specifically for example, 5, 6, 7, 8, 9, 10, 11, 12, 13, 14, 15, 16, 17, 18, 19, 20, 25, or 30, and can be in the range between the two values exemplified herein. When the melt mass flow rate is too low, chemical resistance or molding property can deteriorate. When the melt mass flow rate is too high, the stringing property can deteriorate.

As the method for increasing the melt mass flow rate of the heat resistant resin composition, flowability improving agent such as silicone oil can be added, or the molecular weight of the AS resin or the maleimide-based copolymer being formulated can be decreased. Further, as the method for decreasing the melt mass flow rate, formulation amount of the ABS resin can be increased, or the molecular weight of the AS resin or the maleimide-based copolymer being formulated can be increased. Two or more of these measures can be adopted in combination.

The Vicat softening temperature of the heat resistant resin composition is measured in accordance with JIS K 7206 using Method 50 (load: 50N, temperature elevation rate: 50 °C/hour). The Vicat softening temperature is preferably 105 °C to 130 °C, more preferably 110 °C to 120 °C. The Vicat softening temperature is, specifically for example, 105, 110, 111, 112, 113, 114, 115, 116, 117, 118, 119, 120, 121, 122, 123, 124, 125, or 130 °C, and can be in the range between the two values exemplified herein. When the Vicat softening temperature is below 105 °C, the heat resistance of the heat resistant resin composition is deteriorated. When the Vicat softening temperature exceeds 130 °C, the molding property or the chemical resistance of the heat resistant resin composition is deteriorated.

To adjust the Vicat softening temperature of the heat resistant resin composition, the kind or the amount of the maleimide-based copolymer in the heat resistant resin composition can be adjusted. For example, formulation amount of the maleimide-based copolymer can be increased or the amount of the maleimide-based monomer unit in the maleimide-based copolymer can be increased to allow the Vicat softening temperature become higher.

The heat resistant resin composition can be blended with other components to an extent that it does not impair the effect of the present invention. Such components include other resin components, impact resistance modifier, flowability modifier, hardness modifier, antioxidants, inorganic fillers, matting agents, flame retardants, flame retardant aid, anti-drip agents, sliding property imparting agent, heat dissipating material, electromagnetic wave absorbing material, plasticizers, lubricants, mold release agents, ultraviolet absorbers, light stabilizers, antibacterial agents, antifungal agents, antistatic agents, carbon black, titanium oxide, pigments, dyes, and the like.

Further, the heat resistant resin composition can contain non-crosslinking rubbery component such as poly(meth)acrylic acid-based polymer, polybutadiene-based polymer, and polyolefin-based polymer in terms of adjusting the value of ratio G'/G".

As the non-crosslinking rubbery component, for example, poly(meth)acrylic acid-based polymer such as polybutyl acrylate, polyethyl (meth)acrylate, polypropyl (meth)acrylate, polyoctyl (meth)acrylate, and poly(2-ethyl)hexyl (meth)acrylate; polybutadiene-based polymer such as polybutadiene; and polyolefin-based polymer such as polyethylene and polypropylene can be mentioned. Here, poly(meth)acrylic acid-based polymer and polybutadiene-based polymer are preferable. These non-crosslinking rubbery components can be used alone, or two or more of these can be used in combination. In addition, the non-crosslinking rubbery component can be a copolymer with a copolymerizable monomer.

As a molding method of the heat resistant resin composition, a known method can be adopted. For example, injection molding, sheet extrusion molding, vacuum molding, blow molding, foam molding, and profile extrusion molding can be mentioned. During molding, processing is usually performed after heating the heat resistant resin composition to 200 to 280 °C, and such temperature is preferably 210 to 270 °C. The molded article can be used in applications such as automobiles, household appliances, OA equipment, residential building materials, and daily necessities. Since the heat resistant resin composition of the present invention has superior thermal stability, the amount of volatile components does not change significantly even when molded at a high temperature. On the other hand, in the heat resistant resin composition using α-methyl styrene-based copolymer, α-methyl styrene is generated and contained by a large amount in the molded body due to thermal decomposition of the α-methyl styrene-based copolymer, depending on the resin temperature and residence time of the resin in the molding machine.

# EXAMPLE

Hereinafter, detailed explanation is provided with reference to Examples. However, the present invention is not limited to the following Examples.

<Production Example of Maleimide-Based Copolymer (A-1)>

To an autoclave having a capacity of about 120 liters equipped with an agitator, 20 parts by mass of styrene, 5 parts by mass of maleic anhydride, 0.1 parts by mass of t-butylperoxy-2-ethylhexanoate, 0.25 parts by mass of α-methyl styrene dimer, and 12 parts by mass of methyl ethyl ketone were charged. After replacing the gaseous phase of the system with nitrogen gas, the temperature was raised to 92 °C over 40 minutes with agitation. After raising the temperature, the temperature was kept at 92 °C, and a solution prepared by dissolving 30 parts by mass of maleic anhydride and 0.22 parts by mass of t-butylperoxy-2-ethylhexanoate in 75 parts by mass of methyl ethyl ketone and 28 parts by mass of styrene were added continuously over 7 hours. Further, after completion of the addition of maleic anhydride, 17 parts by mass of styrene was added continuously over 2 hours. After adding styrene, the temperature of the reaction mixture was raised to 120 °C, and the reaction was carried out for 1 hour to complete polymerization. Thereafter, 21.2 parts by mass of aniline and 0.3 parts by mass of triethylamine were added to the polymerization solution, and reaction was carried out at 140 °C for 7 hours. The imidizing reaction solution after completion of reaction was fed to a vent type screw extruder, and the volatile component was removed to obtain pellet maleimide-based copolymer A-1. The constituting unit was 51 mass% or styrene unit, 48 mass% of N-phenyl maleimide unit, and 1 mass% of maleic anhydride unit. The mid-point glass transition temperature (Tmg) measured by DSC was 186 °C, and the weight average molecular weight was 90,000.

<Production Example of Maleimide-Based Copolymer (A-2)>

To an autoclave having a capacity of about 120 liters equipped with an agitator, 20 parts by mass of styrene, 5 parts by mass of maleic anhydride, 0.1 parts by mass of parts by mass of t-butylperoxy-2-ethylhexanoate, 0.13 parts by mass of $\alpha$-methyl styrene dimer, and 12 parts by mass of methyl ethyl ketone were charged. After replacing the gaseous phase of the system with nitrogen gas, the temperature was raised to 92 °C over 40 minutes with agitation. After raising the temperature, the temperature was kept at 92 °C, and a solution prepared by dissolving 35 parts by mass of maleic anhydride and 0.22 parts by mass of t-butylperoxy-2-ethylhexanoate in 75 parts by mass of methyl ethyl ketone and 28 parts by mass of styrene were added continuously over 7 hours. Further, after completion of the addition of maleic anhydride, 12 parts by mass of styrene was added continuously over 2 hours. After adding styrene, the temperature of the reaction mixture was raised to 120 °C, and the reaction was carried out for 1 hour to complete polymerization. Thereafter, 23.1 parts by mass of aniline and 0.3 parts by mass of triethylamine were added to the polymerization solution, and reaction was carried out at 140 °C for 7 hours. The imidizing reaction solution after completion of reaction was fed to a vent type screw extruder, and the volatile component was removed to obtain pellet maleimide-based copolymer A-2. The constituting unit was 47 mass% or styrene unit, 52 mass% of N-phenyl maleimide unit, and 1 mass% of maleic anhydride unit. The mid-point glass transition temperature (Tmg) measured by DSC was 195 °C, and the weight average molecular weight was 130,000.

<Production Example of Maleimide-Based Copolymer (A-3)>

To an autoclave having a capacity of about 120 liters equipped with an agitator, 20 parts by mass of styrene, 10 parts by mass of acrylonitrile, 5 parts by mass of maleic anhydride, 0.1 parts by mass of parts by mass of t-butylperoxy-2-ethylhexanoate, 0.10 parts by mass of $\alpha$-methyl styrene dimer, and 12 parts by mass of methyl ethyl ketone were charged. After replacing the gaseous phase of the system with nitrogen gas, the temperature was raised to 92 °C over 40 minutes with agitation. After raising the temperature, the temperature was kept at 92 °C, and a solution prepared by dissolving 34 parts by mass of maleic anhydride and 0.22 parts by mass of t-butylperoxy-2-ethylhexanoate in 75 parts by mass of methyl ethyl ketone and 28 parts by mass of styrene were added continuously over 7 hours. Further, after completion of the addition of maleic anhydride, 13 parts by mass of styrene was added continuously over 2 hours. After adding styrene, the temperature of the reaction mixture was raised to 120 °C, and the reaction was carried out for 1 hour to complete polymerization. Thereafter, 20.7 parts by mass of aniline and 0.3 parts by mass of triethylamine were added to the polymerization solution, and reaction was carried out at 140 °C for 7 hours. The imidizing reaction solution after completion of reaction was fed to a vent type screw extruder, and the volatile component was removed to obtain pellet maleimide-based copolymer A-3. The constituting unit was 48 mass% or styrene unit, 46 mass% of N-phenyl maleimide unit, and 6 mass% of maleic anhydride unit. The mid-point glass transition temperature (Tmg) measured by DSC was 195 °C, and the weight average molecular weight was 140,000.

<Production Example of ABS Resin (ABS-1)>

ABS resin was prepared by emulsion-graft polymerization method. To a reactor equipped with an agitator, 97 parts by mass of polybutadiene latex (solid concentration: 50 mass%, average particle diameter: 0.3 um), 12 parts by mass of a styrene-butadiene latex having a styrene content of 24 mass% (solid concentration: 70 mass%, average particle diameter: 0.5 um), 1 part by mass of sodium stearate, 0.2 part by mass of sodium formaldehyde sulfoxylate, 0.01 parts by mass of ethylenediaminetetraacetic acid tetrasodium, 0.005 parts by mass of ferrous sulfate, and 200 parts of pure water were added. The reaction mixture was heated to 50 °C. Subsequently, 43 parts by mass of a monomer mixture containing 75 mass% of styrene and 25 mass% of acrylonitrile, 0.2 parts by mass of t-dodecyl mercaptan, and 0.06 parts by mass of t-butyl peroxyacetate were continuously added separately over 5 hours. After completion of the separate addition, 0.04 parts by mass of diisopropyl benzene peroxide was added and the reaction was carried out for 2 hours at 70 °C to complete polymerization, thereby obtaining a latex of ABS resin. To the obtained latex, 0.3 parts of Irganox 1076 (available from BASF Japan Ltd.) was added. Thereafter, the reaction solution was subjected to coagulation using magnesium sulfate and sulfuric acid so that the pH of the slurry during solidification was 6.8. The coagulated matter was washed and dehydrated, followed by drying to obtain powdered ABS resin. The content of the rubbery polymer was 57 mass% based on the formulation ratio of the raw materials. The constituting unit other than the rubbery polymer measured by NMR was 75 mass% of styrene unit and 25 mass% of acrylonitrile unit. From the observation by transmission electron microscope it became apparent that ABS resin was dispersed as particles, and its volume average particle diameter was 0.4 um. Content of volatile components in the ABS resin was 6,000 $\mu$g/g for styrene and below detection limit (30 $\mu$g/g) for acrylonitrile.

<Production Example of SAN resin (SAN-1)>

SAN resin was prepared by continuous bulk polymerization. One continuous stirred tank mixing vessel was used as the reactor, and polymerization was performed with a capacity of 20 L. A raw material solution containing 60 mass% of styrene, 22 mass% of acrylonitrile, and 18 mass% of ethyl benzene was prepared, and was continuously supplied to the reactor at a flow rate of 6.5 L/h. Further, t-butyl peroxy isopropyl monocarbonate as the polymerization initiator and n-dodecyl mercaptan as the chain transfer agent were continuously added to the supply line of the raw material solution so that the concentration would be 160 ppm and 400 ppm, respectively. The reaction temperature of the reactor was adjusted to 145 °C. The polymer solution taken continuously from the reactor was supplied to the vacuum devolatilization tank equipped with a pre-heater, and unreacted styrene and acrylonitrile, and ethyl benzene were removed. Temperature of the pre-heater was adjusted so that the temperature of the polymer in the devolatilization tank would be 225 °C, and the pressure in the devolatilization tank was set to 0.4 kPa. Polymer was taken out from the vacuum devolatilization tank using a gear pump and was extruded into strands. The strands were cooled in cooling water and were cut to obtain pelletized SAN resin. The constituting unit of the SAN resin was 74 mass% of styrene unit and 26 mass% or acrylonitrile. The weight average molecular weight of the SAN resin was 100,000.

<Production Example of SAN resin (SAN-2)>

SAN resin was prepared by continuous bulk polymerization. One continuous stirred tank mixing vessel was used as the reactor, and polymerization was performed with a capacity of 20 L. A raw material solution containing 57 mass% of styrene, 25 mass% of acrylonitrile, and 18 mass% of ethyl benzene was prepared, and was continuously supplied to the reactor at a flow rate of 6.5 L/h. Further, t-butyl peroxy isopropyl monocarbonate as the polymerization initiator and n-dodecyl mercaptan as the chain transfer agent were continuously added to the supply line of the raw material solution so that the concentration would be 160 ppm and 400 ppm, respectively. The reaction temperature of the reactor was adjusted to 145 °C. The polymer solution taken continuously from the reactor was supplied to the vacuum devolatilization tank equipped with a pre-heater, and unreacted styrene and acrylonitrile, and ethyl benzene were removed. Temperature of the pre-heater was adjusted so that the temperature of the polymer in the devolatilization tank would be 225 °C, and the pressure in the devolatilization tank was set to 0.4 kPa. Polymer was taken out from the vacuum devolatilization tank using a gear pump and was extruded into strands. The strands were cooled in cooling water and were cut to obtain pelletized SAN resin. The constituting unit of the SAN resin was 70 mass% of styrene unit and 30 mass% or acrylonitrile. The weight average molecular weight of the SAN resin was 120,000.

<Production Example of SAN resin (SAN-3)>

SAN resin was prepared by continuous bulk polymerization. One continuous stirred tank mixing vessel was used as the reactor, and polymerization was performed with a capacity of 20 L. A raw material solution containing 60 mass% of styrene, 22 mass% of acrylonitrile, and 18 mass% of ethyl benzene was prepared, and was continuously supplied to the reactor at a flow rate of 6.5 L/h. Further, t-butyl peroxy isopropyl monocarbonate as the polymerization initiator was continuously added to the supply line of the raw material solution so that the concentration would be 160 ppm. The reaction temperature of the reactor was adjusted to 145 °C. The polymer solution taken continuously from the reactor was supplied to the vacuum devolatilization tank equipped with a pre-heater, and unreacted styrene and acrylonitrile, and ethyl benzene were removed. Temperature of the pre-heater was adjusted so that the temperature of the polymer in the devolatilization tank would be 225 °C, and the pressure in the devolatilization tank was set to 0.4 kPa. Polymer was taken out from the vacuum devolatilization tank using a gear pump and was extruded into strands. The strands were cooled in cooling water and were cut to obtain pelletized SAN resin. The constituting unit of the SAN resin was 70 mass% of styrene unit and 30 mass% or acrylonitrile. The weight average molecular weight of the SAN resin was 145,000.

<additive-1>

HP 4051 available from DOW-MITSUI POLYCHEMICALS CO.,LTD. was used as additive-1.

<additive-2>

L-1000 available from Mitsubishi Chemical Corporation was used as additive-2.

<additive-3>

SH-200 10CS available from HANWA SANGYO Co.,Ltd was used as additive-3.

<additive-4>

PEG-20000 available from Sanyo Chemical Industries, Ltd. was used as additive-4.

<Examples, Comparative Examples>

Maleimide-based copolymer, ABS resin, and SAN resin in the formulation shown in Table 1 were subjected to melt-kneading and devolatilization-extruding using an extruder to obtain heat resistant resin composition. Twin-screw extruder (TEM-35B, available from TOSHIBA MACHINE CO., LTD, currently SHIBAURA MACHINE CO., LTD.) was used as the extruder. Regarding the constitution of the extruder, a kneading unit in which melt-kneading of each of the resins was performed was provided, followed by another kneading unit in which water was added and kneaded, and then a devolatilization unit was provided. The temperature of the cylinders of the kneading unit and the devolatilization unit were set to the temperature shown in Table 1. Extrusion was performed with a screw rotation speed of 250 rpm and a feed rate of 30 kg/hr. Water was added so that the addition amount with respect to the fed amount would be 0.5 mass%. The pressure of the devolatilization unit was 10 mmHg. The following evaluations were conducted for the heat resistant resin composition thus obtained. Evaluation results are shown in Tables 1 and 2.

(G'/G")

Measurement of G'/G" was performed by using viscoelasticity measuring apparatus DHR available from TA Instruments Japan Inc. Parallel plate of 25 mm was used for the measurement, with a gap of 0.75 mm, strain of 5% and measurement temperature of 240 °C. The value of G'/G" at an angular velocity of 0.63 rad/s are shown in Tables 1 and 2.

(Vicat softening temperature)

Vicat softening temperature was measured in accordance with JIS K-7206. Here, Method 50 (load: 50N, temperature elevation rate: 50 °C/hour) was used, and the test specimen having the size of 10 mm $\times$ 10 mm and 4 mm thickness was used. HDT & VSPT testing device available from Toyo Seiki Seisaku-sho, Ltd. was used as the measuring instrument.

(melt mass flow rate)

Melt mass flow rage was measured in accordance with JIS K-7210, at 220 °C with 10 kg load.

(Charpy impact strength)

Charpy impact strength was measured using a notched specimen in accordance with JIS K-7111-1. Edgewise was adopted as the striking direction. Here, digital impact tester available from Toyo Seiki Seisaku-sho, Ltd. was used as the measuring instrument.

(stringing property)

In accordance with JIS K-7171, stringing property was observed by using a test specimen having a size of 80 mm $\times$ 10 mm $\times$ 4 mm. The test specimen was pressed onto a heated plate of 240 °C with 1 kg load for 10 seconds and then the test specimen was drawn up at a rate of 10 cm/sec. The stringing property was evaluated by a scale of 5 with the following criteria using the length of stringed resin.

A: stringing was cut by a length of less than 1.0 cm; B: stringing was cut by a length of 1.0 cm or more to less than 4.0 cm. C: stringing was cut by a length of 4.0 cm or more to less than 7.0 cm; D: stringing was cut by a length of 7.0 cm or more to less than 10.0 cm; E: stringing was elongated to 10 cm or longer.

(chemical resistance)

Cracks of a test specimen having a shape of $316 \times 20 \times 2$ mm were observed after 48 hours at 23 °C by a quarter ellipse method having a major radius of 250 mm and a minor radius of 150 mm. In order to eliminate influence of molding strain, the test specimen was produced by pressing and cutting out a pellet at 260 °C. Toluene was used as the chemical.

Critical strain was obtained by the following equation.

$$\varepsilon = b/2a^2 \, [1 - (a^2 - b^2)X^2/a^4]^{1.5} \times t \times 100$$

Critical strain: E, major radius: a, minor radius: b, thickness of test specimen: t, crack initiation point: X

The chemical resistance was evaluated from the critical strain according to the following criteria.
A: 0.8 or more, B: 0.6 to 0.7, C: 0.3 to 0.5, D: 0.2 or less

[Table 1]

Table 1

| | | | | Example | | | | | | | | | | | | | |
|---|---|---|---|---|---|---|---|---|---|---|---|---|---|---|---|---|---|
| | | | | 1 | 2 | 3 | 4 | 5 | 6 | 7 | 8 | 9 | 10 | 11 | 12 | 13 |
| formulation amount | resin (B) | ABS-1 | mass% | 20 | 20 | 20 | 20 | 20 | 20 | 20 | 20 | 20 | 20 | 20 | 20 | 20 |
| | | SAN-1 | mass% | 60 | | 50 | | 60 | | 60 | 60 | 60 | 60 | 60 | | |
| | | SAN-2 | mass% | | 60 | | 50 | | 60 | | | | | | | |
| | | SAN-3 | mass% | | | | | | | | | | | | 70 | 50 |
| | copolymer (A) | A-1 | mass% | 20 | 20 | 30 | 30 | 10 | 10 | | | 10 | 10 | 10 | 10 | 30 |
| | | A-2 | mass% | | | | | | | 20 | | | | | | |
| | | A-3 | mass% | | | | | | | | 20 | | | | | |
| | formulation of additive | (A)+(B) | parts by mass | | | | | | | | | 100 | 100 | 100 | | |
| | | additive-1 | parts by mass | | | | | | | | | 1 | 2 | | | |
| | | additive-2 | parts by mass | | | | | | | | | | | 2 | | |
| result of physical property evaluation | G'/G'' | | – | 0.38 | 0.46 | 0.32 | 0.40 | 0.32 | 0.35 | 0.32 | 0.32 | 0.75 | 0.90 | 0.56 | 0.51 | 0.52 |
| | Vicat softening temperature 50N | | °C | 113 | 116 | 118 | 120 | 106 | 107 | 112 | 112 | 111 | 111 | 111 | 110 | 122 |
| | MFR 220°C, 10kg | | g/10min | 8 | 5 | 11 | 7 | 25 | 14 | 12 | 9 | 18 | 18 | 17 | 3 | 3 |
| | Charpy impact strength with notch | | kJ/m² | 5.1 | 11.9 | 5.1 | 4.6 | 6.6 | 5.6 | 6.3 | 4.2 | 6.2 | 6.2 | 6 | 15.3 | 9.4 |
| | stringing property | | | B | A | C | A | C | C | C | C | A | A | A | A | A |
| | chemical resistance | | | B | B | B | B | A | B | B | B | A | A | A | D | D |

[Table 2]

Table 2

|  |  |  | | Comparative Example | | | | | | | |
|---|---|---|---|---|---|---|---|---|---|---|---|
|  |  |  | | 1 | 2 | 3 | 4 | 5 | 6 | 7 | 8 |
| formulation amount | resin(B) | ABS-1 | mass% | 20 | 20 | 20 | 20 | 20 | 20 | 25 | 12.5 |
|  |  | SAN-1 | mass% | 60 | 70 | 60 |  | 60 | 60 | 75 | 37.5 |
|  |  | SAN-2 | mass% |  |  |  | 70 |  |  |  |  |
|  |  | SAN-3 | mass% |  |  |  |  |  |  |  |  |
|  | copolymer(A) | A-1 | mass% | 20 | 10 | 20 | 10 | 20 | 20 | 0 | 50 |
|  | formulation of additive | (A)+(B) | parts by mass |  |  | 100 |  | 100 | 100 |  |  |
|  |  | additive-1 | parts by mass |  |  | 2 |  |  |  |  |  |
|  |  | additive-3 | parts by mass |  |  |  |  | 2 |  |  |  |
|  |  | additive-4 | parts by mass |  |  |  |  |  | 2 |  |  |
| result of physical property evaluation | G'/G" | – |  | 0.15 | 0.12 | 0.29 | 0.16 | 0.16 | 0.15 | 0.10 | 1.10 |
|  | Vicat softening temperature 50N | °C |  | 111 | 104 | 103 | 106 | 111 | 111 | 100 | 130 |
|  | MFR 220°C, 10kg | g/10min |  | 18 | 29 | 30 | 17 | 20 | 18 | 24 | 3 |
|  | Charpy impact strength with notch | kJ/m² |  | 5.8 | 6.6 | 6.9 | 5.6 | 6.5 | 6.1 | 9.0 | 1.0 |
|  | stringing property |  |  | E | E | D | E | E | E | E | A |
|  | chemical resistance |  |  | A | A | A | A | A | A | A | E |

From the results of Tables 1 and 2, when G'/G" of the resin had a value of 0.30 to 1.00, the stringing property was improved, and thus heat resistant resin composition having heat resistance and appearance with superior balance was obtained. In Examples 1 to 11, chemical resistance was high, and in Examples 5, and 9 to 11, chemical resistance was especially superior. In addition, when the MFR of the resin was 5 or higher, the chemical resistance of the resin was improved even higher. Further, when additive was used, G'/G" was increased, thereby resulting in improvement in stringing property.

The mechanism on how the stringing property can be improved by controlling the G'/G" still remains unsolved. Here, one assumption is that the indicator related to the dynamic viscoelasticity of the resin composition when the resin composition is in a molten state during fusion-bonding using heated plates has an influence on the stringing property. With the present invention, it became apparent that when G'/G" among various indicators related to the dynamic viscoelasticity was controlled within a certain range, it can contribute greatly in improving the stringing property.

**INDUSTRIAL APPLICABILITY**

By using the heat resistant resin composition of the present invention, molding can be carried out without appearance defects even when adhesion is performed by fusion-bonding using heated plates, which is a low-cost bonding technology. In addition, even when a resin with high flowability is used to improve productivity, molding can be carried out without appearance defects. In addition, by controlling the value of G'/G" of the resin in the afore-mentioned range, heat resistant resin composition having flowability, chemical resistance, heat resistance and appearance with superior balance can be obtained. The heat resistant resin composition can be suitably used in applications such as automobiles, home appliances, office automation equipment, housing materials, and daily necessities.

**Claims**

1. A heat resistant resin composition, comprising:

   a maleimide-based copolymer (A); and
   at least one resin (B) selected from the group consisting of: ABS resin, ASA resin, AES resin, and SAN resin; wherein:
   the heat resistant resin composition has a ratio G'/G" of storage modulus (G') to loss modulus (G") measured in accordance with JIS K 7244-10 under conditions of 240 °C at an angular velocity of 0.63 rad/s is 0.30 or more and 1.00 or less.

2. The heat resistant resin composition of Claim 1, wherein the maleimide-based copolymer (A) is contained by 5 to 40 mass%, and the resin (B) is contained by 60 to 95 mass%.

3. The heat resistant resin composition of Claim 1 or 2, wherein the maleimide-based copolymer (A) comprises 40 to 60 mass% of an aromatic vinyl monomer unit and 60 to 40 mass% of a maleimide-based monomer unit.

4. The heat resistant resin composition of any one of Claims 1 to 3, wherein a melt mass flow rate of the heat resistant resin composition measured in accordance with JIS K 7210 under conditions of 220 °C and 10 kg is 5 to 30 g/10 min.

5. The heat resistant resin composition of any one of Claims 1 to 4, wherein a Vicat softening temperature of the heat resistant resin composition measured in accordance with JIS K-7206 is 105 °C to 130 °C.

6. An injection molded body molded by using the heat resistant resin composition of any one of Claims 1 to 5.

7. The injection molded body of Claim 6 used as an interior material or an exterior material of an automobile.

## INTERNATIONAL SEARCH REPORT

| | |
|---|---|
| International application No. | **PCT/JP2021/032235** |

**A. CLASSIFICATION OF SUBJECT MATTER**

*C08L 25/12*(2006.01)i; *C08L 35/06*(2006.01)i; *C08L 51/04*(2006.01)i; *C08L 101/12*(2006.01)i
FI: C08L101/12; C08L35/06; C08L51/04; C08L25/12

According to International Patent Classification (IPC) or to both national classification and IPC

**B. FIELDS SEARCHED**

Minimum documentation searched (classification system followed by classification symbols)

C08L25/12; C08L35/06; C08L51/04; C08L101/12

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2004-323772 A (DENKI KAGAKU KOGYO KK) 18 November 2004 (2004-11-18)<br>paragraph [0001], examples | 1-7 |
| X | WO 2008/026554 A1 (DENKI KAGAKU KOGYO KABUSHIKI KAISHA) 06 March 2008 (2008-03-06)<br>claims, paragraph [0006], examples | 1-7 |
| X | WO 2016/186133 A1 (DENKA COMPANY LTD) 24 November 2016 (2016-11-24)<br>claims, paragraphs [0006], [0059], examples | 1-7 |
| A | JP 7-41624 A (DENKI KAGAKU KOGYO KK) 10 February 1995 (1995-02-10)<br>entire text | 1-7 |
| A | JP 9-143319 A (TORAY IND INC) 03 June 1997 (1997-06-03)<br>entire text | 1-7 |
| A | JP 11-35760 A (DENKI KAGAKU KOGYO KK) 09 February 1999 (1999-02-09)<br>entire text | 1-7 |

☑ Further documents are listed in the continuation of Box C.   ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **27 October 2021** | **16 November 2021** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**

| International application No. |
| --- |
| **PCT/JP2021/032235** |

**C.     DOCUMENTS CONSIDERED TO BE RELEVANT**

| Category* | Citation of document, with indication, where appropriate, of the relevant passages | Relevant to claim No. |
| --- | --- | --- |
| A | JP 2004-346148 A (DENKI KAGAKU KOGYO KK) 09 December 2004 (2004-12-09)<br>     entire text | 1-7 |
| A | JP 2005-298774 A (DENKI KAGAKU KOGYO KK) 27 October 2005 (2005-10-27)<br>     entire text | 1-7 |
| A | JP 2005-298776 A (DENKI KAGAKU KOGYO KK) 27 October 2005 (2005-10-27)<br>     entire text | 1-7 |
| A | WO 2010/082617 A1 (DENKI KAGAKU KOGYO KABUSHIKI KAISHA) 22 July 2010<br>(2010-07-22)<br>     entire text | 1-7 |

Form PCT/ISA/210 (second sheet) (January 2015)

INTERNATIONAL SEARCH REPORT
Information on patent family members

International application No.

**PCT/JP2021/032235**

| Patent document cited in search report | | | Publication date (day/month/year) | Patent family member(s) | | | Publication date (day/month/year) |
|---|---|---|---|---|---|---|---|
| JP | 2004-323772 | A | 18 November 2004 | (Family: none) | | | |
| WO | 2008/026554 | A1 | 06 March 2008 | CN | 101506299 | A | |
| | | | | claims, page 3, lines 1-5, examples | | | |
| | | | | KR | 10-2009-0055559 | A | |
| | | | | TW | 200831591 | A | |
| WO | 2016/186133 | A1 | 24 November 2016 | EP | 3299415 | A1 | |
| | | | | claims, paragraphs [0006], [0059], examples | | | |
| | | | | KR | 10-2018-0008639 | A | |
| | | | | CN | 107614598 | A | |
| | | | | TW | 201708361 | A | |
| JP | 7-41624 | A | 10 February 1995 | (Family: none) | | | |
| JP | 9-143319 | A | 03 June 1997 | (Family: none) | | | |
| JP | 11-35760 | A | 09 February 1999 | (Family: none) | | | |
| JP | 2004-346148 | A | 09 December 2004 | (Family: none) | | | |
| JP | 2005-298774 | A | 27 October 2005 | (Family: none) | | | |
| JP | 2005-298776 | A | 27 October 2005 | (Family: none) | | | |
| WO | 2010/082617 | A1 | 22 July 2010 | US | 2011/0319567 | A1 | |
| | | | | entire text | | | |
| | | | | EP | 2388282 | A1 | |
| | | | | CA | 2749689 | A1 | |
| | | | | CN | 102282183 | A | |
| | | | | TW | 201031680 | A | |
| | | | | KR | 10-2011-0110311 | A | |

Form PCT/ISA/210 (patent family annex) (January 2015)

**EP 4 212 584 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP S5798536 A

- JP S57125242 A